# EUROPÄISCHE PATENTANMELDUNG

(11) **EP 3 716 437 A1**
(43) Veröffentlichungstag der Anmeldung: **30.09.2020**
(21) Anmeldenummer: 19165666.9
(22) Anmeldetag: 28.03.2019
(51) Int. Cl.: H02J 3/00, H02J 13/00

(54) **VERFAHREN UND SYSTEM ZUM ÜBERWACHEN DES BETRIEBSZUSTANDES VON HOCHSPANNUNGSGERÄTEN EINES ENERGIEVERSORGUNGSNETZES**

(71) Anmelder: Siemens Aktiengesellschaft, 80333 München (DE)
(72) Erfinder: Baumann, Saskia, 90409 Nürnberg (DE); Elmer, Marcel, 90451 Nürnberg (DE); Natter, Beatrix, 82166 Gräfelfing (DE); Raith, Johannes, 8162 Passail (AT); Singh, Puneet Harminder, 90439 Nürnberg (DE)

(57) **Zusammenfassung**

Die Erfindung betrifft ein Verfahren (1) zum Überwachen des Betriebszustandes von Hochspannungsgeräten (5) eines Energieversorgungsnetzes bei dem
- mittels Sensoren, die an oder in den Hochspannungsgeräten (5) angeordnet sind, Messwerte erfasst werden,
- die Messwerte oder aus den Messwerten abgeleitete Werte über eine Nahbereichs-Kommunikationsverbindung an Kommunikationseinheiten (4) übermittelt werden,
- Zugangsdaten zu einem Abfragezeitpunkt an eine Datenverarbeitungs-Cloud (2) übermittelt werden,
- die Datenverarbeitungs-Cloud (2) eine von den Zugangsdaten abhängige Anzahl von Kommunikationseinheiten (4) auswählt und sich mit den ausgewählten Kommunikationseinheiten (4) über eine Fernbereichs-Kommunikationsverbindung (3) verbindet,
- die Messwerte und/oder die von den Messwerten abgeleiteten Werte über die Fernbereichs-Kommunikationsverbindung (3) von den ausgewählten Kommunikationseinheiten (4) an die Datenverarbeitungs-Cloud (2) übertragen werden,
- die Datenverarbeitungs-Cloud (2) anhand der Messwerte und/oder der von den Messwerten abgeleiteten Werte eine Visualisierung erzeugt, die den Betriebszustand der Hochspannungsgeräte darstellt, die über die Nahbereichs-Kommunikationsverbindung mit wenigstens einer der ausgewählten Kommunikationseinheiten (4) verbunden sind.

## Beschreibung

Die Erfindung betrifft ein Verfahren zum Überwachen des Betriebszustandes von Hochspannungsgeräten eines Energieversorgungsnetzes.

Die Erfindung betrifft ferner ein System zum Beobachten des Betriebszustandes von Hochspannungsgeräten eines Energieversorgungsnetzes.

Ein solches Verfahren und ein solches System sind aus der WO 2016/023585 A1 bekannt. Dort ist ein Verfahren beschrieben, mit dem der Betriebszustand eines Energieversorgungsnetzes überwacht werden kann. Hierzu sind an bestimmten Messstellen des Energieversorgungsnetzes Sensoren angeordnet, die die Spannung oder den über die Messstellen fließenden Strom unter Gewinnung von Messwerten erfassen und die Messwerte an eine Beobachtungseinrichtung übertragen. Die Beobachtungseinrichtung erzeugt anschließend eine Visualisierung, die auf den Messwerten oder auf davon abgeleiteten Werten basiert. Ferner ist ein Applikationsserver vorgesehen, der außerhalb des Einflussbereichs des Betreibers des Energieversorgungsnetzes liegt. Mit Hilfe des Applikationsservers kann eine Auswertung und/oder eine Bearbeitung der Messwerte erfolgen, wobei Systemstatuswerte gebildet werden, die den Betriebszustand des Energieversorgungsnetzes an den Messstellen angeben. Die Systemstatuswerte werden von dem Applikationsserver an die Beobachtungseinrichtung übermittelt, wobei die Beobachtungseinrichtung die Systemstatuswerte bei der Visualisierung berücksichtigt und anzeigt.

Aus der DE 20 2018 102 060 U1 ist bekannt, Transformatoren mit Kommunikationseinheiten auszurüsten, die eingangsseitig mit Sensoren und ausgangsseitig mit einer Datenverarbeitungs-Cloud verbindbar sind, so dass mit Hilfe der Datenverarbeitungs-Cloud Aussagen über den Betriebsstatus des Transformators möglich sind.

Dem eingangs genannten Verfahren und dem eingangs genannten System haftet der Nachteil an, dass die im Energieversorgungsnetz verteilt angeordneten Hochspannungsgeräte nicht gemeinsam überwacht werden können.

Aufgabe der Erfindung ist es daher, ein Verfahren und ein System der eingangs genannten Art zu schaffen, mit dem eine einfache und kostengünstige Überwachung von Hochspannungsgeräten eines Energieversorgungsnetzes ermöglicht ist.

Die Erfindung löst diese Aufgabe durch ein Verfahren der eingangs genannten Art, bei dem mittels Sensoren, die an oder in den Hochspannungsgeräten angeordnet sind, Messwerte erfasst werden, die Messwerte oder aus den Messwerten abgeleitete Werte über eine Nahbereichs-Kommunikationsverbindung an Kommunikationseinheiten übermittelt werden, Zugangsdaten zu einem Abfragezeitpunkt an eine Datenverarbeitungs-Cloud übermittelt werden, die Datenverarbeitungs-Cloud eine von den Zugangsdaten abhängige Anzahl von Kommunikationseinheiten auswählt und sich mit den ausgewählten Kommunikationseinheiten über eine FernbereichsKommunikationsverbindung verbindet, die Messwerte und/oder die von den Messwerten abgeleiteten Werte über die Fernbereichs-Kommunikationsverbindung von den Kommunikationseinheiten an die Datenverarbeitungs-Cloud übertragen werden, die Datenverarbeitungs-Cloud anhand der Messwerte und/oder der von den Messwerten abgeleiteten Werte eine Visualisierung erzeugt, die den Betriebszustand der Hochspannungsgeräte darstellt, die über die Nahbereichs-Kommunikationsverbindung mit wenigstens einer der ausgewählten Kommunikationseinheiten verbunden sind.

Ausgehend von dem eingangs genannten System löst die Erfindung die Aufgabe dadurch, dass das System
- Sensoren, die an oder in einem Hochspannungsgerät angeordnet und zum Erfassen von Messwerten eingerichtet sind, wobei die Messwerte oder von den Messwerten abgeleitete Werte den Betriebszustand des Hochspannungsgeräts angeben,
- eine Kommunikationseinheit, die über eine Nahbereichs-Kommunikationsverbindung mit einer Anzahl von Sensoren verbunden ist,
- eine Datenverarbeitungs-Cloud, die über eine Fernbereichs-Kommunikationsverbindung mit den Kommunikationseinheiten verbindbar ist, und
- eine Nutzereinheit aufweist, die mit der Datenverarbeitungs-Cloud unter Angabe von Zugangsdaten verbindbar ist, wobei die Datenverarbeitungs-Cloud sich auf der Grundlage der Zugangsdaten, mit ausgewählten Kommunikationseinheiten verbindet und dazu eingerichtet ist, anhand der Messwerte und/oder daraus abgeleiteten Werten eine Visualisierung bereitzustellen, welche den Betriebszustand der Hochspannungsgerät anzeigt, die mit wenigstens einer der ausgewählten Kommunikationseinheiten verbunden sind.

Erfindungsgemäß kann sich ein Nutzer mit Hilfe von Zugangsdaten oder mit anderen Worten Log-In-Daten bei einer Datenverarbeitungs-Cloud anmelden. Die Datenverarbeitungs-Cloud erkennt anhand der Nutzerdaten, welche Hochspannungsgeräte beziehungsweise welche Kommunikationseinheiten für den Nutzer relevant sind. Hierzu verfügt die Datenverarbeitungs-Cloud über eine zweckmäßige Datenbank, die auf einen Speicher der Datenverarbeitungs-Cloud abgelegt ist. Ist der Nutzer beispielsweise ein Betreiber eines bestimmten Bereichs oder eines Energieversorgungsnetzes, erkennt die Datenverarbeitungs-Cloud beispielsweise, dass der Nutzer zehn Transformatoren, zwanzig Leistungsschalter, zehn Betriebsschalter, fünf Ableiter und drei Kondensatorbatterien betreibt. Jeder dieser Hochspannungsgeräte weist Sensoren auf, die mit wenigstens einer Kommunikationseinheit verbunden sind. Nur mit diesen Kommunikationseinheiten, die im Folgenden als ausgewählte Kommunikationseinheiten bezeichnet sind, setzt sich die Datenverarbeitungs-Cloud im Rahmen der Erfindung in Verbindung.

Die Verbindung erfolgt über eine Fernbereichs-Kommunikationsverbindung. Um diese herzustellen, verfügt die Kommunikationseinheit über eine Fernbereichskommunikationseinrichtung, wie beispielsweise ein Mobilfunkmodul nach GPRS- oder UMTS-Standard auf. Mit diesem wird eine Fernbereichskommunikationsverbindung, vorzugsweise eine IP-basierte Datenverbindung, mit der Datenverarbeitungs-Cloud aufgebaut. Dabei kann beispielsweise ein Anbieter eines Mobilfunkdienstes oder ein Telekommunikationsanbieter zwischengeschaltet sein und die Fernbereichskommunikationsverbindung kann zumindest teilweise über ein Kommunikationsnetz dieses Anbieters und/oder zumindest teilweise über das Internet hergestellt werden. Zur Herstellung der Verbindung fällt dann ein nur sehr geringer Konfigurations- beziehungsweise Parametrieraufwand an. Außer der Konfigurierung der Fernbereichs-Kommunikationseinrichtung mit den für den Aufbau der FernbereichskommunikationsVerbindung notwendigen Informationen, z.B. den Einbau einer SIM-Karte eines Telekommunikationsanbieters, muss für die einzelne Kommunikationseinheit kein weiterer Aufwand betrieben werden.

Die Sensoren sind hingegen im Rahmen der Erfindung über eine Nahbereichskommunikations-Verbindung mit der Kommunikationseinheit verbunden. Die Nahbereichskommunikations-Verbindung kann beispielsweise ein einfaches Kabel sein. Abweichend davon ist die Nahbereichskommunikations-Verbindung beispielsweise eine ZigBee-, eine Bluetooth-, eine Wireless-, Ambus- oder eine WiFi-Kommunikationsverbindung. Die Nahbereichs-Kommunikationsverbindung erstreckt sich maximal über 100 Meter.

Ein elektrisches Energieversorgungsnetz dient zur Übertragung und Verteilung elektrischer Energie vom Erzeuger bis hin zum Endverbraucher. Eine wichtige Aufgabe eines Energieversorgungsnetzes ist die Sicherung und Verbesserung der Zuverlässigkeit der Versorgung des Endverbrauchers mit elektrischer Energie. Es liegt daher im Interesse des Energieversorgers etwaige Ausfälle der Versorgung mit elektrischer Energie, beispielsweise in Folge von Kurzschlüssen oder Erdschlüssen, zu reduzieren. Bevor ein in einem Energieversorgungsnetz auftretender Fehler behoben werden kann, muss der Betreiber des Energieversorgungsnetzes zunächst erkennen, dass im Energieversorgungsnetz überhaupt ein Fehler vorliegt. Darüber hinaus ist es hilfreich, wenn der Betreiber bereits vor dem Ausfall eines Hochspannungsgeräts auf eine mögliche Fehlerquelle hingewiesen wird. Hierbei wird er durch die Erfindung unterstützt.

Unter einer Datenverarbeitungs-Cloud soll hier eine Anordnung mit einer oder mehreren Datenspeichereinrichtungen und einer oder mehreren Datenverarbeitungseinrichtung verstanden werden, die durch geeignete Programmierung zur Durchführung beliebiger Datenverarbeitungsprozesse ausgebildet werden kann. Die Datenverarbeitungseinrichtungen stellen hierbei in der Regel universelle Datenverarbeitungseinrichtung, wie beispielsweise Server, dar, die hinsichtlich ihrer Konstruktion und ihrer Programmierung zunächst keinerlei spezifische Auslegung aufweisen. Erst durch eine vorgenommene Programmierung lässt sich die universelle Datenverarbeitungseinrichtung zur Ausführung spezifischer Funktionen ertüchtigen.

Insofern die Datenverarbeitungs-Cloud mehrere einzelne Komponenten aufweist, sind diese auf geeignete Weise zur Datenkommunikation miteinander verbunden, beispielsweise durch ein Kommunikationsnetzwerk. Einer Datenverarbeitungs-Cloud können beliebige Daten zur Datenspeicherung und/oder Verarbeitung zugeführt werden. Die Datenverarbeitungs-Cloud selbst stellt die gespeicherten Daten und/oder die Ereignisse der durchgeführten Datenverarbeitung wiederum anderen Geräten, beispielsweise mit einer Datenverarbeitungs-Cloud verbundenen Computerarbeitsstationen, Laptops, Smartphones zur Verfügung. Eine Datenverarbeitungs-Cloud kann beispielsweise durch ein Rechenzentrum oder auch mehrere vernetzte Rechenzentren bereitgestellt werden. Üblicherweise ist eine Datenverarbeitungs-Cloud räumlich entfernt von den Hochspannungsgeräten ausgebildet.

Die Kommunikationseinheit weist bevorzugt wenigstens einen analogen und wenigstens einen digitalen Eingang auf. Somit können mehrere Sensoren mit einer Kommunikationseinheit verbunden werden. Die Kommunikationseinheit verfügt beispielsweise über einen Haupt- und einen Nebenprozessor sowie über eine Speichereinheit, in der vorverarbeitete Messwerte oder daraus abgeleitete Werte abgelegt und bearbeitet werden können, z.B. durch Mittelwertbildung. Die Messwerte verschiedener Sensoren können daher gemeinsam von einer Kommunikationseinheit über eine Fernbereichskommunikationsverbindung an die Datenverarbeitungs-Cloud gesendet werden.

Bei den Sensoren kann es sich beispielsweise um Strom-, Spannungsmesser, Temperaturmesser, Druckmesser, Statusmelder von Schaltern (offen, geschlossen, Fehler) oder Zuständen von Sicherungen (intakt, gezündet) handeln. Die Sensoren können im Rahmen der Erfindung auch Drücke, Viskositäten eines Mediums oder Statusmeldungen von Ventilzuständen erfassen. Auch Gassensoren können im Rahmen der Erfindung eingesetzt werden, die beispielsweise Partialdrücke eines bestimmten Gases erfassen. Auch optische Sensoren zum Erfassen von Lichtbögen sind im Rahmen der Erfindung möglich.

Die Zustandsdaten sind beispielsweise übliche Log-In-Daten. So bestehen die Zustandsdaten beispielsweise aus einem Benutzernamen und einem Passwort, das dem Benutzernamen individuell zugeordnet ist.

Die Datenverarbeitungs-Cloud verfügt zweckmäßigerweise über eine Datenbank, mit deren Hilfe sich ermitteln lässt, welche Hochspannungsgeräte dem jeweiligen Nutzer der Datenverarbeitungs-Cloud zugeordnet ist. In der Tabelle sind weitere Daten hinterlegt, die eine Verbindung zwischen der Datenverarbeitungs-Cloud und den ausgewählten Kommunikationseinheiten ermöglicht.

Eine Visualisierung im Rahmen der Erfindung kann grundsätzlich beliebig ausgestaltet sein. Vorteilhafterweise werden bei der Visualisierung Messwerte und/oder von den Messwerten abgeleitete Werte verwendet, die vor dem Abfragezeitpunkt erfasst beziehungsweise abgeleitet wurden.

Mit Hilfe von Messwerten oder abgeleiteten Werten aus der Vergangenheit können so genannte dynamische Effekte berücksichtigt und sichtbar gemacht werden. Nimmt beispielsweise die Temperatur einer Isolierflüssigkeit eines Transformators als Hochspannungsgerät nicht kontinuierlich, sondern sprunghaft z.B. von einer Minute auf die andere zu, so ist dies sicherlich ein Hinweis auf einen Fehler, der baldmöglichst behoben werden sollte.

Um auf die vor dem Abfragezeitpunkt liegenden Messwerte und/oder daraus abgeleiteten Werten zugreifen zu können, ist wenigstens eine Speichereinheit notwendig. Diese Speichereinheit ist im Rahmen einer Weiterentwicklung der Erfindung beispielsweise in der Kommunikationseinheit vorgesehen. Gemäß dieser Variante der Erfindung ist es nicht notwendig, permanent eine Fernbereichskommunikationsverbindung zwischen Kommunikationseinheit und Datenverarbeitungs-Cloud aufrecht zu erhalten. Im Rahmen dieser Weiterentwicklung können die Messwerte oder daraus abgeleitete Werte lokal abgespeichert werden. Die lokal gespeicherten Werte werden dann bei der nächsten Verbindung mit der Datenverarbeitungs-Cloud an diese gesendet.

Bei einer weiteren Variante der Erfindung werden vor dem Abfragezeitpunkt erfasste Messwerte und/oder von diesen abgeleitete Werte auf einem Speicher der Datenverarbeitungs-Cloud abgelegt. Gemäß dieser vorteilhaften Weiterentwicklung weist entweder nur die Datenverarbeitungs-Cloud oder die Datenverarbeitungs-Cloud zusätzlich zu den Kommunikationseinheiten eine Speichereinheit auf. Diese zentrale Speichereinheit dient zum Abspeichern der Messwerte und/oder darauf abgeleiteten Werten z.B. nachdem eine Fernbereichskommunikationsverbindung zwischen Kommunikationseinheit und Datenverarbeitungs-Cloud durch den Nutzer am Abfragezeitpunkt hergestellt wurde. Abweichend davon kann sich die Datenverarbeitungs-Cloud zu festen Intervallen mit jeder Kommunikationseinheit in Verbindung treten, um auf lokal gespeicherten Daten zuzugreifen, um diese auf der größeren zentralen Speichereinheit abzulegen. Ein Überlaufen der lokalen Speicher der Kommunikationseinheiten ist somit vermieden.

Gemäß einer weiteren Variante der Erfindung besteht fortwährend eine Fernbereichskommunikationsverbindung zwischen den Kommunikationseinheiten und der Datenverarbeitungs-Cloud, so dass die Messwerte und/oder daraus abgeleitete Werte fortwährend zur Speichereinheit der Datenverarbeitungs-Cloud übertragen und dort gespeichert werden, um im Abfragezeitpunkt mit anderen Daten, Werten oder Informationen zeitaufgelöst dargestellt werden zu können.

Gemäß einer bevorzugten Weiterentwicklung der Erfindung wird die Visualisierung mit Hilfe eines Quotienten von Laststrom zu Nennstrom bezogen auf das jeweilige Hochspannungsgerät erzeugt. Hierbei ist der Laststrom, der tatsächlich von den Sensoren erfasste Strom, der beispielsweise durch eine Hochspannungswicklung oder über einen Hochspannungsschalter fließt. Der Nennstrom ist der Strom, der über das jeweilige Hochspannungsgerät fließen soll. Der Nennstrom ist mit anderen Worten zuvor festgelegter Parameter. Übersteigt der Quotient von Laststrom zu Nennstrom einen Schwellenwert, beispielsweise 1.5, kann die Visualisierung dies mit Hilfe einer bestimmten Farbe des Hochspannungsgeräts verdeutlichen. Handelt es sich bei dem Hochspannungsgerät beispielsweise um einen Transformator, so wird dieser beispielsweise stark schematisiert mit seinem Gehäuse und seinen Durchführungen dargestellt. Liegt der Quotient von Last- zu Nennstrom bei 1, ist der Transformator grün. Übersteigt der Quotient jedoch 2, wird eine rote Darstellung des Transformators gewählt, wodurch der kritischen Zustand des Transformators angedeutet werden soll. Darüber hinaus kann bei Überschreiten des Schwellenwertes, beispielsweise 2, ein Warnsignal von Datenverarbeitungs-Cloud an den Nutzer gesendet werden.

Vorteilhafterweise erkennt die Datenverarbeitungs-Cloud eine solche Grenzwertüberschreitung auch dann, wenn der Nutzer nicht mit der Datenverarbeitungs-Cloud verbunden ist. In diesem Falle kann beispielsweise die Datenverarbeitungs-Cloud eine warnende SMS, Email oder ein sonstiges Signal an ein Mobiltelefon oder aber an eine Überwachungsstation übermitteln.

Gemäß einer weiteren vorteilhaften Ausgestaltung des erfindungsgemäßen Verfahrens werden zeitlich vor dem Abfragezeitpunkt liegende Messwerte und/oder daraus abgeleiteten Werte in einem Diagramm mit Daten korreliert dargestellt, die nicht von den Messwerten der Sensoren abgeleitet sind. Bei diesen Daten handelt es sich beispielsweise um Temperaturwerte, die von einem mit dem Internet verbundenen Wetterdienst bezogen worden sind. Darüber hinaus können Windstärken, Sonneneinstrahlungswerte oder sonstige Einflussgrößen des Status der Hochspannungsgeräte berücksichtigt werden. Auch die Messwerte anderer Hochspannungsgeräte können berücksichtigt und zeitlich dargestellt werden.

Gemäß einer bevorzugten Variante der Erfindung wird bei der Visualisierung eine Landkarte dargestellt, auf der die mit den ausgewählten Kommunikationseinheiten verbundenen Hochspannungsgeräte schematisch verdeutlicht sind. Wie bereits weiter oben angedeutet, kann beispielsweise ein Transformator in der Visualisierung vereinfacht durch ein Symbol dargestellt werden. Entsprechendes gilt für einen Leistungsschalter, einen Trennschalter, eine Kondensatorbatterie, Ableiter oder andere Hochspannungsgeräte.

Ist der Nutzer beispielsweise ein Betreiber eines Energieversorgungsnetzes und für eine Anzahl von Transformatoren, Leistungsschaltern, Kondensatorbatterien, Funkenstrecken oder dergleichen verantwortlich, werden seine Hochspannungsgeräte gemeinsam auf der Landkarate geografisch dargestellt. So erhält der Nutzer einen guten Überblick über die Hochspannungsgeräte, für die er verantwortlich ist.

Vorteilhafterweise wird anhand der vor dem Abfragezeitpunkt liegenden Messwerte und/oder daraus abgeleiteten Werte eine Vorhersage über den weiteren Verlauf der Auslastung und der Lebensdauer der Hochspannungsgeräte erzeugt, wobei diese in der Visualisierung ebenfalls schematisch dargestellt werden. Wird beispielsweise mit Hilfe einer Kamera das Auftreten eines Lichtbogens in einem Transformatorkessel oder einem Leistungsschalter überwacht, kann mit Hilfe der erfassten Lichtbögen und einer einfachen Extrapolation oder einer komplexeren Simulation eine Vorhersage dahin getroffen werden, wie lange eine Wartung des jeweils überwachten Hochspannungsgeräts noch hinausgeschoben werden kann beziehungsweise wann genau diese erfolgen sollte.

Bei dieser Vorhersage werden sowohl Messwerte beziehungsweise daraus abgeleitete Werte berücksichtigt, die vor dem Abfragezeitpunkt liegen, als auch Messwerte, die in etwa zum Abfragezeitpunkt und/oder während einer Sitzung des Nutzers in der Cloud erfasst werden.

Die Berücksichtigung in der Vergangenheit liegender Messwerte erhöht die Genauigkeit der Vorhersage.

Vorteilhafterweise werden mittels einer Antenne zur Positionsbestimmung, die in der Kommunikationseinheit angeordnet ist, die geografische Lage der jeweiligen Kommunikationseinheit und des damit verbundenen Hochspannungsgeräts ermittelt und auf Grundlage der geografischen Daten die Wetterbedingungen von einem Wetternachrichtendienst ermittelt. Gemäß dieser vorteilhaften Weiterentwicklung müssen die Wetterbedingungen Vorort nicht aufwändig erfasst werden. Vielmehr kann im Rahmen der Erfindung auf ohnehin - z.B. im Internet - vorhandene Daten zurückgegriffen werden. Die auf diese Weise gewonnenen Daten über die Wetterbedingungen können bei der Visualisierung ebenfalls aufgezeigt werden.

Gemäß einer vorteilhaften Weiterentwicklung des Systems weist die Datenverarbeitungs-Cloud eine Speichereinheit auf, auf der fortwährend Messwerte und/oder aus den Messwerten abgeleitete Werte gespeichert werden, die von den Kommunikationseinheiten über eine Fernbereichskommunikationsverbindung übermittelt werden. Die Fernbereichskommunikationsverbindung kann, wie bereits weiter oben ausgeführt wurde, fortwährend oder mit anderen Worten permanent sein. Abweichend davon ist es im Rahmen der Erfindung jedoch auch möglich, die Fernbereichskommunikationsverbindung in bestimmten Intervallen aufzubauen, um Datenblöcke aus Messwerten, die zwischen Abfrageintervallen erfasst und lokal gespeichert wurden, zu übertragen.

Zweckmäßigerweise weist jede Kommunikationseinheit eine Speichereinheit auf, auf der fortwährend Messwerte und/oder aus den Messwerten abgeleitete Werte gespeichert werden, wobei zu einem Abfragezeitpunkt zeitlich vor diesem liegende Messwerte und/oder von diesem abgeleitete Werte zur Datenverarbeitungs-Cloud übertragen werden.

Vorteilhafterweise ist jede Kommunikationseinheit mit einer Antenne zur Positionsbestimmung ausgerüstet.

Weitere zweckmäßige Ausgestaltungen und Vorteile der Erfindung sind Gegenstand der nachfolgenden Beschreibung von Ausführungsbespielen der Erfindung unter Bezug auf die Figuren der Zeichnung, wobei gleiche Bezugszeichen auf gleichwirkende Bauteile verweisen und wobei
- Figur 1: ein Ausführungsbeispiel des erfindungsgemäßen Verfahrens und des erfindungsgemäßen Systems und
- Figur 2: ein weiteres Ausführungsbeispiel des erfindungsgemäßen Verfahrens und des erfindungsgemäßen Systems schematisch verdeutlichen.

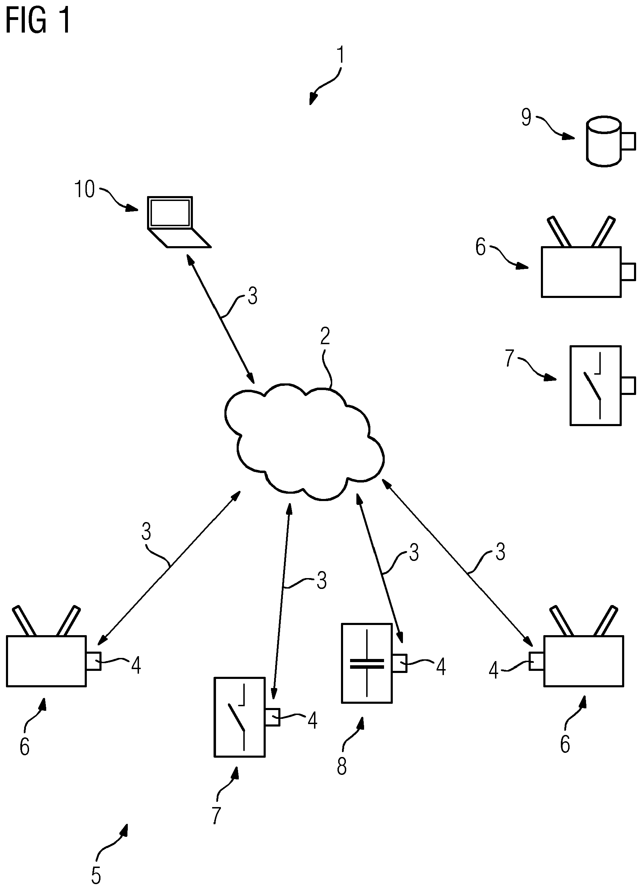

Figur 1 zeigt ein Ausführungsbeispiel des erfindungsgemäßen Verfahrens 1, bei dem eine Datenverarbeitungs-Cloud 2 erkennbar ist, die über eine Fernbereichskommunikationsverbindung 3 mit Kommunikationseinheiten 4 verbunden ist, die jeweils an oder in der Nähe eines Hochspannungsgerätes 5 befestigt sind. Bei den Hochspannungsgeräten 5 handelt es sich in dem dargestellten Ausführungsbeispiel um einen Transformator, der schematisch mit seinen säulenartigen Durchführungen gezeigt ist, einen Hochspannungsleistungsschalter 7 und eine Kondensatorbatterie 8. Ferner ist eine Nutzereinheit in Gestalt eines Laptops 10 erkennbar, mit dessen Hilfe der Nutzer Zugangsdaten über eine Fernbereichskommunikationsverbindung 3 an die Datenverarbeitungs-Cloud 2 sendet. Die Zugangsdaten umfassen in dem gezeigten Ausführungsbeispiel einen Benutzernamen sowie ein Passwort, das dem Benutzernamen fest zugeordnet ist.

Die Datenverarbeitungs-Cloud 2 verfügt ferner über eine figürlich nicht dargestellte Speichereinheit, auf der eine Datenbank abgelegt ist. In der Datenbank ist festgelegt, welche Hochspannungsgeräte 5 den Zugangsdaten, also in diesem Fall dem Benutzernamen, zugeordnet sind. Ist der Nutzer beispielsweise der Betreiber eines Energieversorgungsnetzes mit einer Reihe von Hochspannungsgeräten in Gestalt von Transformatoren, Leistungsschaltern, Trennern oder Ableitern, für die er verantwortlich ist, so kann er sich mittels Eingabe seiner Zugangsdaten mit der Datenverarbeitungs-Cloud 2 verbinden. Diese stellt anhand des Benutzernamens unter Zugriff auf die besagte Datenbank fest, welche Hochspannungsgeräte in den Verantwortungsbereich des Nutzers fallen. Anschließend greift die Datenverarbeitungs-Cloud 2 über eine Fernbereichskommunikationsverbindung 3 auf die Kommunikationseinheiten 4 zu, die in der Nähe der Hochspannungsgeräte 5 angeordnet sind, die dem Benutzernamen zugeordnet sind. Diese Kommunikationseinheiten 4 werden als ausgewählte Kommunikationseinheiten 4 bezeichnet. Jede Kommunikationseinheit 4 weist mehrere Eingänge auf, die z.B. sowohl analog als auch digital ausgestaltet sind. An wenigstens einen der Eingänge ist ein am Sensor oder im Hochspannungsgerät angeordneter Sensor angeschlossen, der Messwerte erfasst und diese Messwerte über eine figürlich nicht dargestellte Nahbereichskommunikations-Verbindung an die Kommunikationseinheit überträgt.

In dem Transformator 6 sind im gezeigten Beispiel mehrere Sensoren vorgesehen. Ein Sensor erfasst die Temperatur des Isolierfluids, hier ein Ester, im oberen Bereich des Tanks. Ein weiterer Sensor erfasst die Temperatur des Isolierfluids im unteren Bereich des Tanks. Ein weiterer Sensor erfasst die durch die Oberspannungswicklung fließenden Ströme, wohingegen ein weiterer Sensor eine Kamera ist, welche das Auftreten von Funkenentladungen registriert. Alle Sensoren übertragen ihre Messwerte oder daraus abgeleitete Werte an die Kommunikationseinheit 4, die diese Messwerte bearbeitet. Hierzu weist die Kommunikationseinheit 4 zweckmäßige Prozessoren sowie eine Speichereinheit auf, in der die erfassten Messwerte und/oder die daraus abgeleiteten Werte zwischengespeichert werden. Die Bearbeitung der Messwerte durch die Kommunikationseinheit erfolgt hier durch eine zweckmäßige Mittelung über eine gewisse Zeitdauer hinweg. Die Kommunikationseinheit 4 speichert die gemittelten Werte in ihrer Speichereinheit lokal. So können die Messwerte beispielsweise über Wochen hinweg in der Kommunikationseinheit 4 gespeichert sein.

Greift der Nutzer mit seinem Laptop 10 auf die Datenverarbeitungs-Cloud 2 in einem Abfragezeitpunkt zu, werden die vor diesem Abfragezeitpunkt in der Kommunikationseinheit 4 gespeicherten Werte an die Datenverarbeitungs-Cloud 2 übertragen. Die Datenverarbeitungs-Cloud 2 speichert die übertragenen Daten auf ihrer figürlich nicht dargestellten Speichereinheiten. Die dort gespeicherten Werte oder mit anderen Worten Daten können nun z.B. bei einer zweckmäßigen Visualisierung berücksichtigt werden.

Jede Kommunikationseinheit 4 verfügt ferner über eine Antenne, die eine Positionsbestimmung der Kommunikationseinheit 4 ermöglicht. Die Kommunikationseinheit 4 ist der Nähe, also weniger als 100m entfernt, des jeweiligen Hochspannungsgerätes 5 angeordnet. Mit anderen Worten kann mit der Positionsbestimmung der Kommunikationseinheit 4 auch die geografische Lage des jeweiligen Hochspannungsgeräts erfasst werden. Dies erfolgt durch ein Positionsbestimmungssystem wie beispielsweise GPS, Galileo oder dergleichen. Ist die geografische Lage des Hochspannungsgeräts ermittelt, greift die Datenverarbeitungs-Cloud 2 auf für diesen Ort vorliegenden Wetterdaten zu, indem die Datenverarbeitungs-Cloud 2 auf die Datenbank eines Wetterdienstes zugreift, um beispielsweise Sonneneinstrahlung, Windstärke und Außentemperatur am Ort des jeweiligen Hochspannungsgeräts zu ermitteln.

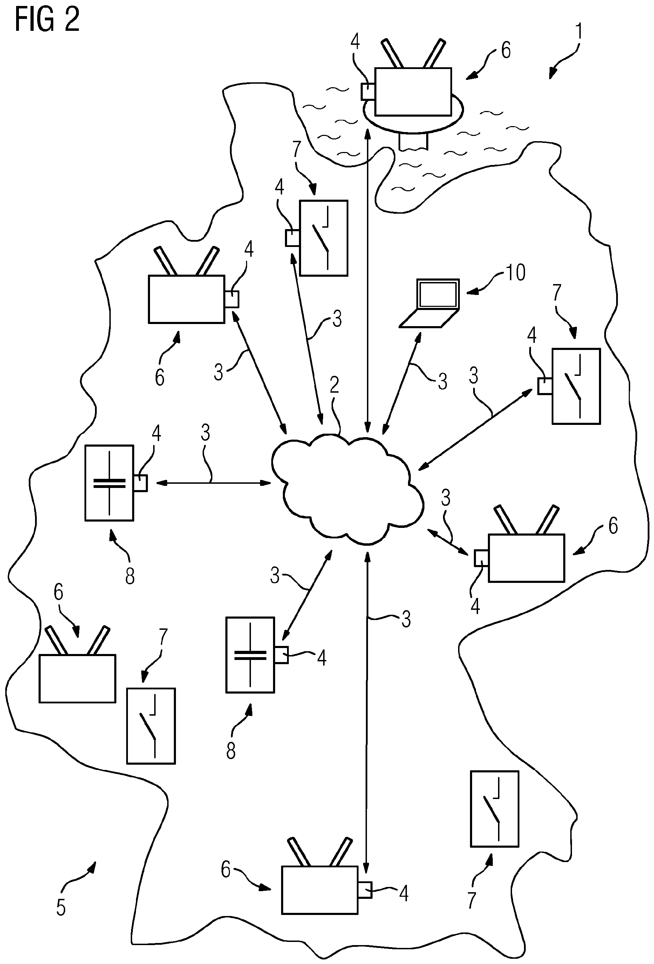

Figur 2 zeigt ein weiteres Ausführungsbeispiel des erfindungsgemäßen Verfahrens und des erfindungsgemäßen Systems, bei dem die geografische Lage des jeweiligen Hochspannungsgeräts 5 auf einer Deutschlandkarte dargestellt ist. Es ist erkennbar, dass nicht alle Hochspannungsgeräte 5 über eine Fernbereichskommunikationsverbindung 3 mit der Datenverarbeitungs-Cloud 2 verbunden sind. Vielmehr sind einige Hochspannungsgeräte 5 von der Datenverarbeitungs-Cloud 2 entkoppelt. Diese nicht angeschlossenen Hochspannungsgeräte fallen nicht in den Verantwortungsbereich des Nutzers, der über seine Eingabeeinheit 10 mit der Datenverarbeitungs-Cloud 2 verbunden ist. Die nicht ausgewählten Hochspannungsgeräte 5 oder Kommunikationseinheiten 4 sind einem anderen Netzbetreiber zugeordnet.

Um den Status in den Hochspannungsgeräten 5 besser zu verdeutlichen, werden im Rahmen der Erfindung farbige Darstellungen genutzt. Gemäß einer bevorzugten Ausführung der Erfindung wird der über den jeweiligen Transformator 6 fließende Strom als Laststrom erfasst. Der vom Netzbetreiber vorgesehen Nennstrom, also der vorgesehene Sollstrom, ist in der Datenbank der Datenverarbeitungs-Cloud 2 als Parameter hinterlegt. Die Datenverarbeitungs-Cloud 2 greift auf diesen Nennstromparameter zu und bildet den Quotienten aus erfasstem Laststrom und dem besagten Nennstrom. Übersteigt dieser Quotient einen zuvor festgelegten Schwellenwert, beispielsweise 1,5 oder 2, so wechselt die Farbe des dargestellten Transformators 6 von grün auf beispielsweise gelb. Überschreitet der besagte Quotient einen weiteren Schwellenwert, beispielsweise 2,5, wird der Transformator in roter Farbe dargestellt und ein Warnsignal an den Laptop oder ein Mobiltelefon des Nutzers von der Datenverarbeitungs-Cloud 2 übermittelt.

Die Visualisierung der Datenverarbeitungs-Cloud 2 ist jedoch keineswegs auf geografischen Lagen beschränkt. Die Datenverarbeitungs-Cloud 2 kann die von den Sensoren der Hochspannungsgeräte 5 erfassten Messwerte mit beliebigen Daten, die die Datenverarbeitungs-Cloud 2 aus dem so genannten Internet erhält, korrelieren. Darüber hinaus sind Vorhersage mit Hilfe von Simulationstools möglich.

## Patentansprüche

1. Verfahren (1) zum Überwachen des Betriebszustandes von Hochspannungsgeräten (5) eines Energieversorgungsnetzes bei dem
- mittels Sensoren, die an oder in den Hochspannungsgeräten (5) angeordnet sind, Messwerte erfasst werden,
- die Messwerte oder aus den Messwerten abgeleitete Werte über eine Nahbereichs-Kommunikationsverbindung an Kommunikationseinheiten (4) übermittelt werden,
- Zugangsdaten zu einem Abfragezeitpunkt an eine Datenverarbeitungs-Cloud (2) übermittelt werden,
- die Datenverarbeitungs-Cloud (2) eine von den Zugangsdaten abhängige Anzahl von Kommunikationseinheiten (4) auswählt und sich mit den ausgewählten Kommunikationseinheiten (4) über eine Fernbereichs-Kommunikationsverbindung (3) verbindet,
- die Messwerte und/oder die von den Messwerten abgeleiteten Werte über die Fernbereichs-Kommunikationsverbindung (3) von den ausgewählten Kommunikationseinheiten (4) an die Datenverarbeitungs-Cloud (2) übertragen werden,
- die Datenverarbeitungs-Cloud (2) anhand der Messwerte und/oder der von den Messwerten abgeleiteten Werte eine Visualisierung erzeugt, die den Betriebszustand der Hochspannungsgeräte darstellt, die über die Nahbereichs-Kommunikationsverbindung mit wenigstens einer der ausgewählten Kommunikationseinheiten (4) verbunden sind.

2. Verfahren (1) nach Anspruch 1,
**dadurch gekennzeichne**t, dass
bei der Visualisierung Messwerte und/oder von den Messwerten abgeleitete Werte verwendet werden, die vor dem Abfragezeitpunkt erfasst beziehungsweise abgeleitet wurden.

3. Verfahren (1) nach Anspruch 2,
**dadurch gekennzeichnet, dass**
die vor dem Abfragezeitpunkt erfassten Messwerte und/oder davon abgeleitete Werte auf einer Speichereinheit der Kommunikationseinheit (4) gespeichert werden.

4. Verfahren (1) nach Anspruch 2 oder 3,
**dadurch gekennzeichnet, dass**
vor dem Abfragezeitpunkt erfasste Messwerte und/oder von diesen abgeleiteten Werte auf einem Speicher der Datenverarbeitungs-Cloud (2) gespeichert werden.

5. Verfahren (1) nach einem der vorhergehenden Ansprüche,
**dadurch gekennzeichnet, dass**
die Visualisierung mit Hilfe eines Quotienten von Laststrom zu Nennstrom bezogen auf das jeweilige Hochspannungsgerät (5) erzeugt wird.

6. Verfahren (1) nach einem der vorhergehenden Ansprüche,
**dadurch gekennzeichnet, dass**
zeitlich vor dem Abfragezeitpunkt liegende Messwerte und/oder daraus abgeleitete Werte in einem Diagramm mit Daten korreliert dargestellt werden, die nicht von den Messwerten der Sensoren abgeleitet sind.

7. Verfahren (1) nach einem der vorhergehenden Ansprüche,
**dadurch gekennzeichnet, dass**
bei der Visualisierung eine Landkarte darstellt wird, auf der die mit den ausgewählten Kommunikationseinheiten (4) verbundene Hochspannungsgeräte (5) schematisch verdeutlicht sind.

8. Verfahren (1) nach einem der vorhergehenden Ansprüche,
**dadurch gekennzeichnet, dass**
anhand der vor dem Abfragezeitpunkt erfassten Messwerte und/oder daraus abgeleiteten Werte eine Vorhersage über den weiteren Verlauf der Auslastung und Lebensdauer der Hochspannungsgeräte (5) erzeugt wird und diese in der Visualisierung dargestellt wird.

9. Verfahren (1) nach einem der vorhergehenden Ansprüche,
**dadurch gekennzeichnet, dass**
mittels einer Antenne zur Positionsbestimmung, die in einer Kommunikationseinheit (4) angeordnet ist, die geographische Lage der jeweiligen Kommunikationseinheit (4) und des damit verbundenen Hochspannungsgeräts (5) ermittelt und anschließend die Wetterdaten von einem Wetternachrichtendienst erfasst werden, die für die geografische Lage des Hochspannungsgerätes von einem Dienstleister bereitgestellt sind.

10. System zum Beobachten eines Betriebszustandes von Hochspannungsgeräten (5) eines Energieversorgungsnetzes mit
- Sensoren, die an oder in einem Hochspannungsgerät angeordnet und zum Erfassen von Messwerten eingerichtet sind, wobei die Messwerte und/oder von den Messwerten abgeleitete Werte den Betriebszustand des Hochspannungsgeräts angeben,
- Kommunikationseinheiten (4), die über eine Nahbereichs-Kommunikationsverbindung (3) mit wenigstens einem der Sensoren verbunden ist,
- einer Datenverarbeitungs-Cloud (2), die über eine Fernbereichs-Kommunikationsverbindung mit den Kommunikationseinheiten (4) verbindbar ist,
- einer Nutzereinheit (10), die mit der Datenverarbeitungs-Cloud (2) unter Angabe von Zugangsdaten verbindbar ist, wobei
- die Datenverarbeitungs-Cloud (2) sich auf der Grundlage der Zugangsdaten, mit ausgewählten Kommunikationseinheiten (4) verbindet und dazu eingerichtet ist, anhand der Messwerte und/oder daraus abgeleiteten Werten eine Visualisierung bereitzustellen, welche den Betriebszustand der Hochspannungsgeräte (5) anzeigt, die mit wenigstens einer der ausgewählten Kommunikationseinheiten (4) verbunden sind.

11. System nach Anspruch 10,
**dadurch gekennzeichnet, dass**
die Datenverarbeitungs-Cloud eine Speichereinheit aufweist, auf der Messwerte und/oder aus den Messwerten abgeleitete Werte gespeichert werden, die von Kommunikationseinheiten (4) über eine Fernbereichs-Kommunikationsverbindung (3) übermittelt werden.

12. System nach Anspruch 10,
**dadurch gekennzeichnet, dass**
jede Kommunikationseinheit (4) eine Speichereinheit aufweist, auf der Messwerte und/oder aus den Messwerten abgeleitete Werte gespeichert werden, wobei zu einem Abfragezeitpunkt zeitlich vor diesem liegende Messwerte und/oder von diesen abgeleiteten Werte zur Datenverarbeitungs-Cloud (2) übertragen werden.

13. System nach einem der Ansprüche 10 bis 12,
**dadurch gekennzeichnet, dass**
jede Kommunikationseinheit (4) mit einer Antenne zur Positionsbestimmung ausgerüstet ist.

14. Computerprogramm für ein Rechengerät,
**dadurch gekennzeichnet, dass**
es zur Ausführung des Verfahrens nach einem der Ansprüche 1 bis 9 geeignet ist.

15. Speichermedium,
**dadurch gekennzeichnet, dass**
auf ihm ein Computerprogramm nach dem Anspruch 14 gespeichert ist.
